# EUROPÄISCHE PATENTANMELDUNG

(11) **EP 4 674 247 A1**
(43) Veröffentlichungstag der Anmeldung: **07.01.2026**
(21) Anmeldenummer: 25183602.9
(22) Anmeldetag: 18.06.2025
(51) Int. Cl.: A01D 41/12, A01D 43/08, A01D 75/18

(54) **SELBSTFAHRENDER FELDHÄCKSLER**

(30) Priorität: 03.07.2024 DE 102024118901
(71) Anmelder: CLAAS Selbstfahrende Erntemaschinen GmbH, 33428 Harsewinkel (DE)
(72) Erfinder: Löffler, Niklas, 88367 Hohentengen (DE); Deufel, Tobias, 88605 Meßkirch-Menningen (DE)
(74) Vertreter: CLAAS Gruppe

(57) **Zusammenfassung**

Die Erfindung betrifft einen Selbstfahrender Feldhäcksler (1) mit einer Häckselvorrichtung (6), mit einer Nachbeschleunigungsvorrichtung (12), mit einem Erntegutförderschacht (24), der zwischen der Häckselvorrichtung (6) und der Nachbeschleunigungsvorrichtung (12) angeordnet ist, wobei der Erntegutförderschacht (24) einen einstellbaren Innenquerschnitt aufweist.

## Beschreibung

Die Erfindung betrifft einen selbstfahrenden Feldhäcksler gemäß dem Oberbegriff des Anspruchs 1.

Ein selbstfahrende Feldhäcksler der eingangs genannten Art ist aus der DE 10 2016 215 045 A1 bekannt. Darin ist eine als selbstfahrender Feldhäcksler ausgeführte landwirtschaftliche Erntemaschine beschrieben mit zumindest einer Häckselvorrichtung und eine der Häckselvorrichtung prozesstechnisch nachgeordneten Nachbeschleunigungsvorrichtung. In der Häckselvorrichtung wird das von einem Vorsatzgerät des Feldhäckslers aufgenommene Erntegut zerkleinert und anschließend durch einen Erntegutförderschacht der Nachbeschleunigungsvorrichtung zugeführt. Die Nachbeschleunigungsvorrichtung ist zur Beschleunigung des gehäckselten Ernteguts vorgesehen und eingerichtet. Der Nachbeschleunigungsvorrichtung ist eine Überladeeinrichtung zum Auswerfen des Ernteguts in einen Ladebehälter nachgeordnet.

Die DE 10 2016 215 045 A1 schlägt vor einen Innenquerschnitt der der Nachbeschleunigungsvorrichtung nachgeordneten Überladeeinrichtung veränderbar auszugestalten, um Verwirbelungen oder ein Auffächern des Gutstroms innerhalb der Überladeeinrichtung und somit eine verminderte Gutstromqualität zu vermeiden. Trotz des veränderlichen Innenquerschnitts kann in bestimmten Erntesituation die Gutstromqualität innerhalb der Überladeeinrichtung abnehmen, da die Nachbeschleunigungsvorrichtung einen diesem zugeführten Erntegutstrom nicht optimal verarbeiten bzw. annehmen und beschleunigen kann.

Es ist deshalb Aufgabe der Erfindung, die beschriebenen Nachteile des Standes der Technik zu vermeiden und insbesondere einen selbstfahrenden Feldhäcksler zu schaffen, der eine verbesserte Verarbeitung, insbesondere eine verbesserte Annahme und Beschleunigung, eines einer Nachbeschleunigungsvorrichtung zugeführten Erntegutstroms erreicht.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird ein selbstfahrender Feldhäcksler mit einer Häckselvorrichtung, mit einer Nachbeschleunigungsvorrichtung und mit einem Erntegutförderschacht, der zwischen der Häckselvorrichtung und der Nachbeschleunigungsvorrichtung angeordnet ist, vorgeschlagen, wobei der Erntegutförderschacht einen einstellbaren Innenquerschnitt aufweist.

Die Erfindung hat erkannt, dass die Gutpolsterhöhe bzw. Dicke eines Erntegutstroms, mit der die Nachbeschleunigungsvorrichtung gespeist wird, Einfluss auf die Gutstromqualität bzw. eine Auswurfqualität der Nachbeschleunigungsvorrichtung und somit auf die Gutstromqulität des mittels einer der Nachbeschleunigungsvorrichtung nachgeordneten Überladeeinrichtung auf ein Überladefahrzeug auszuwerfenden Erntegutstrom hat. Die Erfindung hat erkannt, dass eine dicke Erntegutmatte besser von der Nachbeschleunigungsvorrichtung verarbeitet werden kann als eine dünne Erntegutmatte. Bei einer der Nachbeschleunigungsvorrichtung zugeführten dickeren Erntegutmatte ist ein aus der Nachbeschleunigungsvorrichtung austretender Erntegutstrahl stabiler, bzw. weist eine geringere Neigung zum Auffächern oder Verwirbeln auf. Mithin ermöglicht es der vorschlagsgemäße Erntegutförderschacht, der zum Einstellen unterschiedlicher Innenquerschnitt vorgesehen und eingerichtet ist, bei geringen Erntegutdurchsätzen den Innenquerschnitt derart zu verringern, sodass die Erntegutmatte gestaucht und somit die dicke der Erntegutmatte vergrößert wird. Demgemäß kann durch den variablen Querschnitt des Erntegutförderschacht auch bei geringeren Erntegutdurchsätzen die Gutstromqulität des auf ein Überladefahrzeug auszuwerfenden Erntegutstroms verbessert werden.

Eine vorteilhafte Weiterbildung sieht vor, dass der Erntegutförderschacht zum Einstellen des Innenquerschnitts zumindest ein positionsveränderliches Wandelement aufweist. Ein derartiges Wandelement ermöglicht es auf besonders einfache Art und Weise einen einstellbaren Innenquerschnitt zu schaffen. Zum Verändern des Innenquerschnitts kann das Wandelement in einen Innenraum des Erntegutförderschachts hinein oder heraus geschwenkt werden.

Eine weitere vorteilhafte Weiterbildung sieht vor, dass der Erntegutförderschacht eine Vorderwand, eine Rückwand und zwei einander gegenüberliegende jeweils die Vorderwand und Rückwand miteinander verbindende Seitenwände umfasst, wobei an einer der Seitenwände das positionsveränderliches Wandelement angeordnet ist. Die Anordnung des Wandelements an einer der Seitenwände ermöglicht es einen an dem Wandelement vorbei geführten Erntegutstrom derart zu stauchen, sodass eine dicke der Erntegutmatte zunimmt.

Gemäß einer vorteilhaften Ausgestaltung kann an beiden Seitenwänden jeweils ein positionsveränderliches Wandelement angeordnet sein. Mithin können beide Wandelemente gleichermaßen zum Stauchen eines Erntegutstroms in den Innenraum hinein geschwenkt werden, sodass ein gestauchter Erntegutstrom mittig durch den Erntegutförderschacht geführt wird.

Für das Strömungsverhalten des Erntegutstroms ist es besonders vorteilhaft, wenn sich das Wandelement ausgehend von einem der Häckselvorrichtung zugewandten Ende des Erntegutförderschachts bis zu einem der Nachbeschleunigungsvorrichtung zugewandten Ende des Erntegutförderschachts erstreckt.

Gemäß einer vorteilhaften Weiterbildung kann das Wandelement schwenkbeweglich mittels eines Gelenks, insbesondere eines Scharniers, an dem Erntegutförderschacht angeordnet sein, wobei vorzugsweise das Gelenk an dem der Häckselvorrichtung zugewandten Ende des Erntegutförderschachts angeordnet ist.

Gemäß einer weiteren vorteilhaften Weiterbildung kann der Feldhäcksler einen Aktor zum Einstellen einer Position des Wandelements umfassen. Mithin ist kein manuelles verstellen der Wandelemente erforderlich, sodass auch kurzfristig auf einen Veränderung des Erntegutdurchsatzes mit einer Anpassung der Position der Wandelemente reagiert werden kann.

Besonders vorteilhaft ist es, wenn der Feldhäcksler eine Steuerungsvorrichtung zur Steuerung und/oder Regelung des Aktors umfasst. Die Steuerungsvorrichtung kann hierbei derart konfiguriert sein, sodass diese automatisch die Position der Wandelemente an eine Erntesituation anpasst.

Weiterhin ist es besonders vorteilhaft, wenn die Steuerungsvorrichtung dazu vorgesehen und eingerichtet ist den Aktor in Abhängigkeit eines Erntegutdurchsatzes anzusteuern. Insbesondere kann die Steuerungsvorrichtung den Aktor derart ansteuern, sodass bei einem geringen Erntegutdurchsatz das Wandelement sich in einer weiter in den Innenraum hineingeschwenkten Position befindet als bei einem hohen Erntegutdurchsatz. Mithin kann bei einem geringeren Erntegutdurchsatz die Erntegutmatte automatisch gestaucht werden, um einen verbesserte Gutstromqulität zu erreichen.

Gemäß einer vorteilhaften Weiterbildung kann die Steuerungsvorrichtung dazu eingerichtet sein, von einer an dem Feldhäcksler angeordneten Schwaddetektionseinrichtung generierte Daten zu empfangen und auszuwerten, wobei die Steuerungsvorrichtung in Abhängigkeit von einer Auswertung der Daten der Schwaddetektionseinrichtung den Erntegutdurchsatz ermittelt. Der so ermittelte Erntegutdurchsatz kann zur Ansteuerung der Aktoren verwendet werden.

Besonders bevorzugt ist es, wenn die Schwaddetektionseinrichtung zumindest einen optischen Sensor umfasst, der Daten betreffend die Form eines von dem Feldhäcksler aufzunehmenden Schwads ermittelt. Hierdurch kann der Erntegutdurchsatz besonders früh ermittelt werden und die Position der Wandelemente für eine bevorstehende Änderung des Erntegutdurchsatz angepasst bzw. eingestellt werden.

Zusätzlich oder alternativ kann die Schwaddetektionseinrichtung mit zumindest einer Sensoranordnung ausgeführt sein, die zur Detektion einer Schichthöhe in einem Einzugsorgan des Feldhäckslers eingerichtet ist, und dass die Schwaddetektionseinrichtung die von der zumindest einen Sensoranordnung bestimmten Daten an die Steuerungsvorrichtung zur Bestimmung des Erntegutdurchsatzes überträgt.

Eine weitere vorteilhafte Ausgestaltung sieht vor, dass in Gutflussrichtung eines Erntegutstroms betrachtet stromabwärts der Häckselvorrichtung ein Zuführkanal angeordnet ist und der Erntegutförderschacht als ein Grasschacht ausgebildet ist, der sich stromabwärts an den Zuführkanal anschließt, wobei vorzugsweise der Grasschacht austauschbar an den Zuführkanal angeordnet ist. Der Grasschacht kann unmittelbar der Nachbeschleunigungsvorrichtung vorgeordnet sein, sodass die Dicke einer der Nachbeschleunigungsvorrichtung zuzuführenden Erntegutmatte besonders vorteilhaft eingestellt werden kann.

Die vorliegende Erfindung wird nachstehend anhand eines in den Zeichnungen dargestellten Ausführungsbeispiels näher erläutert.

Es zeigen:
- Fig. 1: exemplarisch eine schematische Darstellung eines selbstfahrenden Feldhäckslers in Seitenansicht;
- Fig. 2: exemplarisch eine schematische Darstellung eines Förderschachts des Feldhäckslers gemäß Fig. 1 mit einem Grasschacht;
- Fig. 3: exemplarisch eine schematische Darstellung eines als Grasschacht ausgebildeten Erntegutförderschachts; und
- Fig. 4: exemplarisch eine schematische Darstellung eines selbstfahrenden Feldhäckslers mit einer Schwaddetektionseinrichtung.

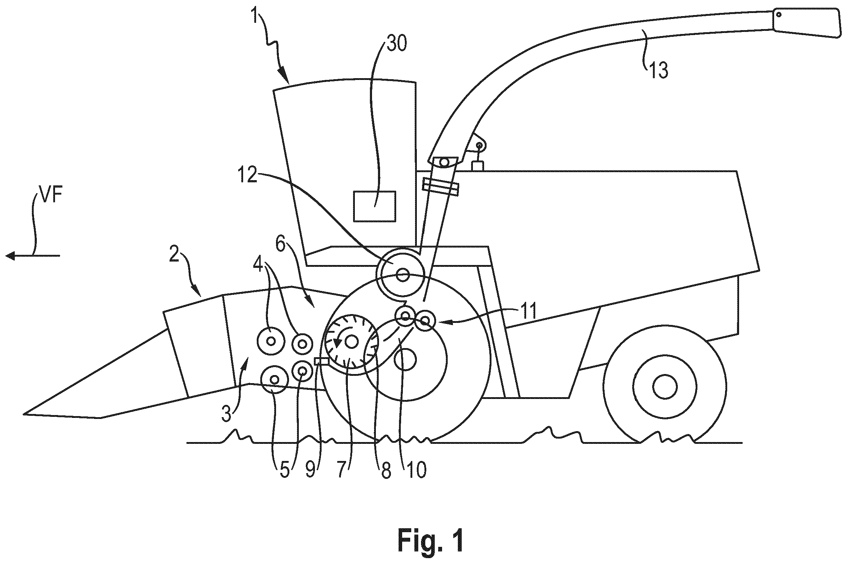

In Fig. 1 ist exemplarisch eine schematische Darstellung eines selbstfahrenden Feldhäckslers 1 in Seitenansicht abgebildet, an welchem im frontseitigen Bereich zur Aufnahme von auf dem Boden befindlichen Ernteguts ein Vorsatzgerät 2 angeordnet ist. Das Vorsatzgerät 2 variiert in Abhängigkeit von der zu erntenden bzw. aufzunehmenden Erntegutart. Das Vorsatzgerät 2 nimmt das Erntegut vom Feld auf und fördert es einem Einzugsorgan 3 zu, die im dargestellten Ausführungsbeispiel aus einer Walzengruppe mit oberen und unteren Einzugswalzen 4, 5 besteht. Die Einzugswalzen 4, 5 des Einzugsorgans 3 üben eine Presskraft auf das aufgenommene Erntegut aus. Das Einzugsorgan 3 fördert das zu einer Erntegutmatte verdichtete Erntegut einer Häckselvorrichtung 6 zu, welche eine rotierend angetriebene Häckseltrommel 7 mit über deren Umfang verteilt angeordneten Häckselmessern 8 aufweist. Die Häckselmesser 8 schneiden die von dem Einzugsorgan 3 zugeführte Erntegutmatte an einer Gegenschneide 9. Das geschnittene bzw. gehäckselte Erntegut gelangt durch die Rotationsbewegung der Häckseltrommel 7 in einen nachgeordneten Zuführkanal 10, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einer nachgeordneten, rotierend angetriebenen Nachbeschleunigungsvorrichtung 12 zusätzlich beschleunigt durch eine verstellbare Überladeeinrichtung 13 in ein mitgeführtes Transportfahrzeug gefördert wird. Die optionale Nachbearbeitungsvorrichtung 11 kann wahlweise aus dem Gutflussweg ausgeschwenkt oder vollständig entfernt werden. Die Überladeeinrichtung 13 ist um eine vertikal verlaufende Achse drehbar, beispielsweise mittels eines Drehkranzes. Zusätzlich und unabhängig davon ist die Überladeeinrichtung 13 um eine horizontal verlaufende Achse schwenkbar. Am freien Ende der Überladeeinrichtung 13 kann eine sogenannte Auswurfklappe angeordnet sein, welche gegenüber der Überladeeinrichtung 13 um eine horizontal verlaufende Achse schwenkbar ist.

Die Nachbearbeitungsvorrichtung 11 kommt insbesondere bei der Maisernte zum Einsatz und dient dem Aufbereiten der Maiskörner. Bei der Grasernte hingegen entfällt der Einsatz der Nachbearbeitungsvorrichtung 11. Anstelle der Nachbearbeitungsvorrichtung 11 ist ein als Erntegutförderschacht 24 ausgebildeter Grasschacht 16 dem Zuführkanal 10 nachgeordnet.

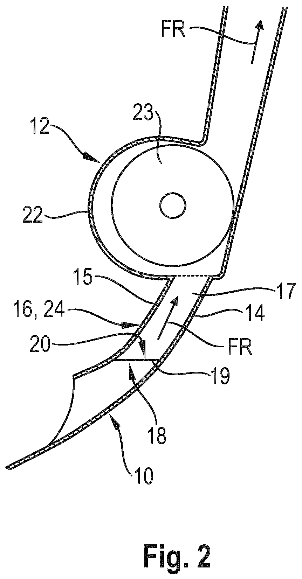

In Fig. 2 ist exemplarisch eine schematische Darstellung des Zuführkanals 10 mit einem an dem Zuführkanal 10 angeordneten Grasschacht 16 gezeigt. Die Häckselvorrichtung 6 und die Nachbeschleunigungsvorrichtung 12 bilden Arbeitsorgane des Feldhäckslers 1, welche in Gutflussrichtung FR eines Erntegutstroms des aufgenommenen und gehäckselten Ernteguts gesehen aufsteigend hintereinander angeordnet und durch den Zuführkanal 10 sowie den Grasschacht 16 miteinander verbunden sind. Aus Vereinfachungsgründen ist die Häckseltrommel 7 in Fig. 2 nicht dargestellt. Die Nachbeschleunigungsvorrichtung 12 umfasst einen in einem Gehäuse 22 angeordneten rotierenden Förderrotor 23. Der Zuführkanal 10 bildet einen unmittelbar an die Häckselvorrichtung 6 angeschlossenen Kanalabschnitt aus, wobei der Grasschacht 16 eine Verlängerung des Zuführkanals 10 hin zu der Nachbeschleunigungsvorrichtung 12 ist. An einen Austrittsbereich 18 des Zuführkanals 10 schließt sich in einem Anschlussbereich 19 ein Eintrittsbereich 20 des Grasschachts 16 an.

Der Grasschacht 16 ist durch eine Rückwand 14 und eine Vorderwand 15 begrenzt. Die Rückwand 14 und die Vorderwand 15 sind durch im Wesentlichen senkrecht zu diesen angeordnete Seitenwände 17 miteinander verbunden, sodass der Grasschacht 16 in Umfangsrichtung geschlossen ist. Die Vorderwand 15 und die Rückwand 14 erstrecken sich im Wesentlichen in axialer Richtung des Förderrotors 23. Die Seitenwände 17 erstrecken sich im Wesentlichen in Vorwärtsfahrtrichtung VF des Feldhäckslers 1.

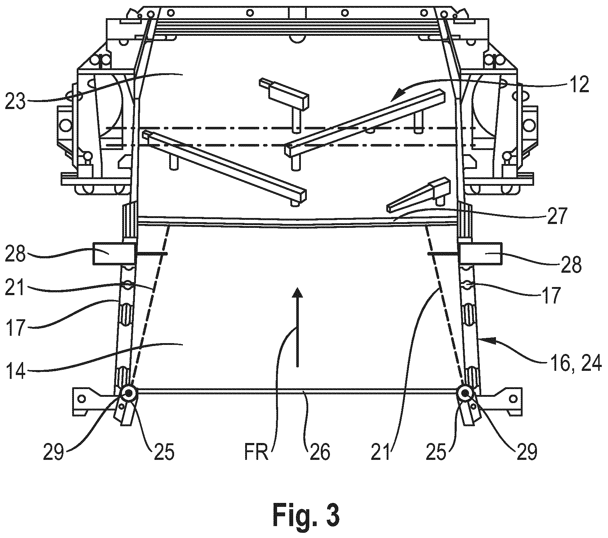

Der Grasschacht 16 bzw. Erntegutförderschacht 24 und die dem Grasschacht 16 nachgeordnete Nachbeschleunigungsvorrichtung 12 sind in Fig. 3 in einer perspektivischen Draufsicht schematisch dargestellt. An den Seitenwände 17 des Grasschachts 16 ist jeweils ein positionsveränderliches Wandelement 21 zum Einstellen des Innenquerschnitts des Grasschachts 16 angeordnet. In einer alternativen Ausführungsform kann auch an lediglich einer der Seitenwände 17 ein positionsveränderliches Wandelement 21 angeordnet sein. Das jeweilige Wandelement 21 erstreckt sich ausgehend von einem der Häckselvorrichtung 6 zugewandten Ende 26 des Grasschachts 16 bis zu einem der Nachbeschleunigungsvorrichtung 12 zugewandten Ende 27 des Grasschachts 16, sodass das jeweilige Wandelement 21 sich im Wesentlichen über die gesamte in Erntegutflussrichtung FR betrachtete Länge des Grasschachts 16 erstreckt. Hier und vorzugsweise erstreckt sich das jeweilige Wandelement 21 ebenfalls im Wesentlichen über die gesamte Breite der jeweiligen Seitenwand 17, sodass es im Wesentlichen die gesamte Fläche der jeweiligen Seitenwand 17 bedeckt. Das jeweilige Wandelement 21 ist jeweils mittels eines nicht näher dargestellten als Scharnier 25 ausgebildeten Gelenks 38 schwenkbeweglich an der jeweiligen Seitenwand 17 angeordnet. Hier und vorzugsweise befindet sich das jeweilige Scharnier 25 an dem der Häckselvorrichtung 6 zugewandten Ende 26 des Grasschachts 16. Mithin wird der Innenquerschnitt durch das Wandelement 21 in einer in den Innenraum des Grasschachts 16 hineingeschwenkten Position des Wandelements 21 in Erntegutflussrichtung FR betrachtet zunehmend verjüngt.

Dem jeweiligen Wandelement 21 ist jeweils ein Aktor 28 zum stufenlosen verschwenken des jeweiligen Wandelements 21 um eine durch das jeweilige Scharnier 25 definierte Schwenkachse 29 zugeordnet. Die Aktoren 28 können als elektrisch oder hydraulisch betätigbare Stellelemente ausgeführt sein. Zusätzlich umfasst der Feldhäcksler 1 eine Steuerungseinrichtung 30, die zum Steuern und/oder Regeln der Aktoren 28 vorgesehen und eingerichtet ist. Die Steuerungseinrichtung 30 ist konfiguriert, um die Aktoren 28 in Abhängigkeit eines Erntegutdurchsatzes anzusteuern. Hierbei steuert die Steuerungseinrichtung 30 die Aktoren 28 derart an, sodass die Wandelemente 21 bei einem geringen Erntegutdurchsatz weiter in den Innenraum des Grasschachts 16 hineingeschwenkt sind als bei einem hohen Erntegutdurchsatz. Mit anderen Worten steuert die Steuerungseinrichtung 30 die Aktoren 28 derart an, sodass die Wandelemente 21 bei einem geringen Erntegutdurchsatz eine größere Verjüngung des Grasschachts 16 bewirken, als bei einem hohen Erntegutdurchsatz. Hierdurch wird erreicht, dass eine der Nachbeschleunigungsvorrichtung 12 zugeführte Erntegutmatte auch bei geringen Durchsätzen eine bevorzugte Dicke aufweist. Eine dickere Erntegutmatte kann von der Nachbeschleunigungsvorrichtung 12 besser verarbeitet werden, sodass ein mittels der Überladeeinrichtung 13 auf ein Überladefahrzeug ausgeworfene Gutstrahl eine verbesserte Auswurfqualität aufweist.

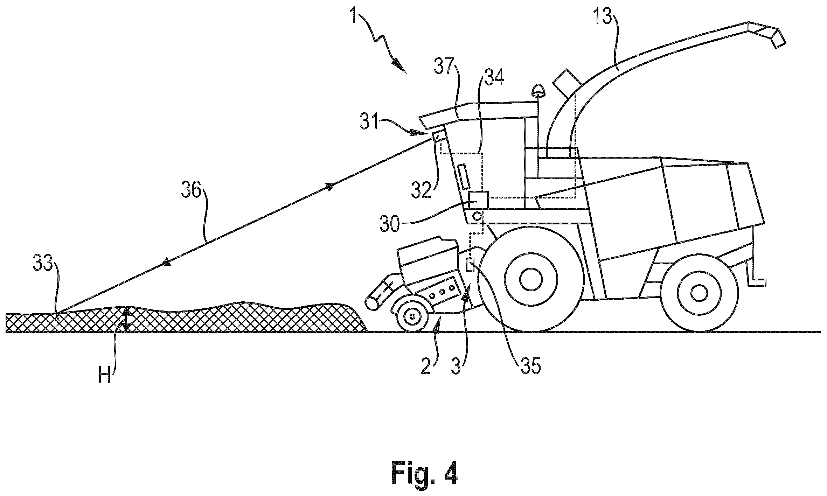

In Fig. 4 ist ein selbstfahrender Feldhäcksler 1 mit einer Schwaddetektionseinrichtung 31 dargestellt. Die Schwaddetektionseinrichtung 31 ist mit zumindest einem optischen Sensor 32 zur Erkennung eines Vorfeldbereiches, d.h. eines in Fahrtrichtung vor der Erntemaschine 1 liegenden Abschnitts, ausgestattet. Der zumindest eine optische Sensor 32 ist dazu vorgesehen und eingerichtet, das Vorhandensein und/oder eine Form eines Schwads 33 vor der Erntemaschine 1 zu erkennen. Die Schwaddetektionseinrichtung 31 überträgt durch den zumindest einen optischen Sensor 32 bestimmte Daten an die Steuerungsvorrichtung 30 zur Auswertung. Hierzu ist der zumindest eine optische Sensor 32 mittels eines Bussystems 34 in signalübertragender Weise mit der Steuerungsvorrichtung 30 verbunden. Der zumindest eine optische Sensor 32 kann als Kamera, RGB-Kamera, 3D-Kamera oder LIDAR ausgeführt sein.

Der zumindest eine an der Fahrerkabine 37 angeordnete Sensor 32 detektiert mittels Abtaststrahlen 36 das Vorhandensein des Schwads 33 ebenso wie dessen Geometrie respektive Form, mit welcher der Schwad 33 in einem vorangehenden Prozess auf dem Boden abgelegt wurde. Wie aus der Darstellung in Fig. 4 ersichtlich ist, weist der Schwad 33 in der Regel eine unregelmäßige Höhenkontur H auf. Die Höhenkontur H verändert sich entlang des Schwads 33 unter anderem in Abhängigkeit von der Bestandsdichte des zuvor abgeernteten Erntegutes. Der Schwad 33 weist nicht nur eine unregelmäßige Höhenkontur H auf, sondern variiert in unterschiedlichem Maße auch in seiner Breite, die ebenfalls von dem Sensor 32 erfasst wird.

Zusätzlich oder alternativ kann die Schwaddetektionseinrichtung 31 mit zumindest einer Sensoranordnung 35 ausgeführt sein, welche zur Detektion einer Schichthöhe in dem Einzugsorgan 3 eingerichtet ist. Mittels der Sensoranordnung 35 lässt sich das Vorhandensein von Erntegut und der Durchsatz an aufgenommenem Erntegut bestimmen.

Die Steuerungseinrichtung ist dazu vorgesehen und eingerichtet mittels der von der Schwaddetektionseinrichtung 31 ermittelten Daten, insbesondere der Form und/oder der Schichthöhe H, den Erntegutdurchsatz zu ermitteln. In der Speichereinheit der Steuerungseinrichtung 30 kann eine Kennlinie oder ein Kennlinienfeld für eine einzustellenden Position der in dem Grasschacht 16 bzw. Erntegutförderschacht 24 angeordneten Wandelemente 21 in Abhängigkeit von dem Erntegutdurchsatz hinterlegt sein. Die Steuerungseinrichtung 30 kann die Kennlinie oder das Kennlinienfeld zur Ansteuerung der Aktoren 28 auswerten.

**Bezugszeichenliste:**

| | | | |
|---|---|---|---|
| 1 | Selbstfahrender Feldhäcksler | 34 | Bussystem |
| 2 | Vorsatzgerät | 35 | Sensoranordnung |
| 3 | Einzugsorgan | 36 | Abtaststrahl |
| 4 | Einzugswalze | 37 | Fahrerkabine |
| 5 | Einzugswalze | 38 | Gelenk |
| 6 | Häckselvorrichtung | | |
| 7 | Häckseltrommel | | |
| 8 | Häckselmesser | | |
| 9 | Gegenschneide | VF | Vorwärtsfahrtrichtung |
| 10 | Zuführkanal | FR | Gutflussrichtung |
| 11 | Nachbearbeitungsvorrichtung | H | Höhenkontur |
| 12 | Nachbeschleunigungsvorrichtung | | |
| 13 | Überladeeinrichtung | | |
| 14 | Rückwand | | |
| 15 | Vorderwand | | |
| 16 | Grasschacht | | |
| 17 | Seitenwand | | |
| 18 | Austrittsbereich | | |
| 19 | Anschlussbereich | | |
| 20 | Eintrittsbereich | | |
| 21 | Wandelement | | |
| 22 | Gehäuse | | |
| 23 | Förderrotor | | |
| 24 | Erntegutförderschacht | | |
| 25 | Scharnier | | |
| 26 | Ende | | |
| 27 | Ende | | |
| 28 | Aktor | | |
| 29 | Schwenkachse | | |
| 30 | Steuerungseinrichtung | | |
| 31 | Schwaddetektionseinrichtung | | |
| 32 | Sensor | | |
| 33 | Schwad | | |

## Patentansprüche

1. Selbstfahrender Feldhäcksler (1)
mit einer Häckselvorrichtung (6),
mit einer Nachbeschleunigungsvorrichtung (12),
mit einem Erntegutförderschacht (24), der zwischen der Häckselvorrichtung (6) und der Nachbeschleunigungsvorrichtung (12) angeordnet ist,
**dadurch gekennzeichnet, dass**
der Erntegutförderschacht (24) einen einstellbaren Innenquerschnitt aufweist.

2. Selbstfahrender Feldhäcksler (1) nach Anspruch 1, **dadurch gekennzeichnet, dass** der Erntegutförderschacht (24) zum Einstellen des Innenquerschnitts zumindest ein positionsveränderliches Wandelement (21) aufweist.

3. Selbstfahrender Feldhäcksler (1) nach Anspruch 2, **dadurch gekennzeichnet, dass** der Erntegutförderschacht (24) eine Vorderwand (15), eine Rückwand (14) und zwei einander gegenüberliegende jeweils die Vorderwand (15) und Rückwand (14) miteinander verbindende Seitenwände (17) umfasst, wobei an einer der Seitenwände (17) das positionsveränderliches Wandelement (21) angeordnet ist.

4. Selbstfahrender Feldhäcksler (1) nach einem der Ansprüche 2 bis 3, **dadurch gekennzeichnet, dass** an beiden Seitenwänden (17) jeweils ein positionsveränderliches Wandelement (21) angeordnet ist.

5. Selbstfahrender Feldhäcksler (1) nach einem der Ansprüche 2 bis 4, **dadurch gekennzeichnet, dass** sich das Wandelement (21) ausgehend von einem der Häckselvorrichtung (6) zugewandten Ende (26) des Erntegutförderschachts (24) bis zu einem der Nachbeschleunigungsvorrichtung (12) zugewandten Ende (27) des Erntegutförderschachts (24) erstreckt.

6. Selbstfahrender Feldhäcksler (1) nach einem der Ansprüche 2 bis 5, **dadurch gekennzeichnet, dass** das Wandelement (21) schwenkbeweglich mittels eines Gelenks (38), insbesondere eines Scharniers (25), an dem Erntegutförderschacht (24) angeordnet ist, wobei vorzugsweise das Gelenk (38) an dem der Häckselvorrichtung (6) zugewandten Ende (26) des Erntegutförderschachts (24) angeordnet ist.

7. Selbstfahrender Feldhäcksler (1) nach einem der Ansprüche 2 bis 6, **dadurch gekennzeichnet, dass** der Feldhäcksler (1) einen Aktor (28) zum Einstellen einer Position des Wandelements (21) umfasst.

8. Selbstfahrender Feldhäcksler (1) nach Anspruch 7, **dadurch gekennzeichnet, dass** der Feldhäcksler (1) eine Steuerungsvorrichtung (30) zur Steuerung und/oder Regelung des Aktors (28) umfasst.

9. Selbstfahrender Feldhäcksler (1) nach Anspruch 8, **dadurch gekennzeichnet, dass** die Steuerungsvorrichtung (30) dazu vorgesehen und eingerichtet ist den Aktor (28) in Abhängigkeit eines Erntegutdurchsatzes anzusteuern.

10. Selbstfahrender Feldhäcksler (1) nach Anspruch 9, **dadurch gekennzeichnet, dass** die Steuerungsvorrichtung (30) dazu eingerichtet ist, von einer an dem Feldhäcksler (1) angeordneten Schwaddetektionseinrichtung (31) generierte Daten zu empfangen und auszuwerten, wobei die Steuerungsvorrichtung (30) in Abhängigkeit von einer Auswertung der Daten der Schwaddetektionseinrichtung (31) den Erntegutdurchsatz ermittelt.

11. Selbstfahrender Feldhäcksler (1) nach Anspruch 10, **dadurch gekennzeichnet, dass** die Schwaddetektionseinrichtung (31) zumindest einen optischen Sensor (32) umfasst, der Daten betreffend die Form eines von dem Feldhäcksler (1) aufzunehmenden Schwads (33) ermittelt.

12. Selbstfahrender Feldhäcksler (1) nach einem der Ansprüche 10 bis 11, **dadurch gekennzeichnet, dass** die Schwaddetektionseinrichtung (31) mit zumindest einer Sensoranordnung (35) ausgeführt ist, die zur Detektion einer Schichthöhe in einem Einzugsorgan (3) des Feldhäckslers (1) eingerichtet ist, und dass die Schwaddetektionseinrichtung (31) die von der zumindest einen Sensoranordnung (35) bestimmten Daten an die Steuerungsvorrichtung (30) zur Bestimmung des Erntegutdurchsatzes überträgt.

13. Selbstfahrender Feldhäcksler (1) nach einem der Ansprüche 1 bis 12, **dadurch gekennzeichnet, dass** in Gutflussrichtung (FR) eines Erntegutstroms betrachtet stromabwärts der Häckselvorrichtung (6) ein Zuführkanal (10) angeordnet ist und der Erntegutförderschacht (24) als ein Grasschacht (16) ausgebildet ist, der sich stromabwärts an den Zuführkanal (10) anschließt, wobei vorzugsweise der Grasschacht (16) austauschbar an den Zuführkanal (10) angeordnet ist.
